# EUROPEAN PATENT APPLICATION

(11) **EP 1 070 622 A2**
(43) Date of publication of application: **24.01.2001**
(21) Application number: 00115460.8
(22) Date of filing: 18.07.2000
(51) Int. Cl.: B60K 15/04

(54) **Vehicle tank fill valve**

(30) Priority: 20.07.1999 IT TO990646
(71) Applicant: MTM- Meccanica Tecnica Moderna S.r.l., 12062 Cherasco (IT)
(72) Inventor: Costamagna, Mariano, 12062 Cherasco (IT)
(74) Representative: Eccetto, Mauro

(57) **Abstract**

A fill valve (1) for a vehicle gaseous fuel tank, the valve having an intermediate cavity (9) defined laterally by a wall (9a) and communicating with a fuel inlet channel (7) and with a fuel feed channel (10) for feeding fuel into a tank (2), and on-off means (12) movable inside the cavity (9) to close one of the channels (7, 10); the on-off means (12) having a closing member (14) housed laterally loosely inside the cavity (9), and a membrane (13) interposed between the closing member (14) and the wall (9a), so that the closing member (14) mates in fluidtight manner with the wall (9a).

## Description

The present invention relates to a valve for filling a vehicle gaseous fuel tank.

Gaseous fuel tanks are filled using fill valves designed to ensure a predetermined maximum fuel level, normally equal to 80% of the tank capacity.

Known fill valves substantially comprise an intermediate cavity communicating via an inlet opening with a fuel inlet channel, and via an outlet opening with a feed channel for feeding fuel into the tank. The intermediate cavity houses a piston-type shutter, which slides along the walls defining the cavity, and divides the cavity into two chambers, one of which communicates with the channels, while the other is connected to the tank when the liquid fuel in the tank falls below a given minimum level, and is cut off when said maximum fuel level in the tank is reached. On the maximum fuel level being reached, the shutter therefore moves into a closed position closing the feed channel and so preventing access to the tank.

Known fill valves of the above type have the drawbacks of relatively slow response - so that, in some cases, the actual fuel level in the tank exceeds the maximum level - and relatively low flow rate; both of which are substantially due to inevitable sliding friction of the shutter.

It is an object of the present invention to provide a fill valve designed to provide a straightforward, low-cost solution to the above problems.

According to the present invention, there is provided a fill valve for a vehicle gaseous fuel tank; the valve comprising an intermediate cavity defined laterally by a wall and communicating with a fuel inlet channel and with a fuel feed channel for feeding fuel into a tank; and on-off means movable inside said cavity and for closing one of said channels; characterized in that said on-off means comprise a closing member housed laterally loosely inside said cavity; and a membrane interposed between said closing member and said wall of the cavity, so that said closing member mates in fluidtight manner with said wall.

The resulting valve therefore prevents the tank from being filled beyond a predetermined maximum level, with no possible delay in the response of the valve means themselves.

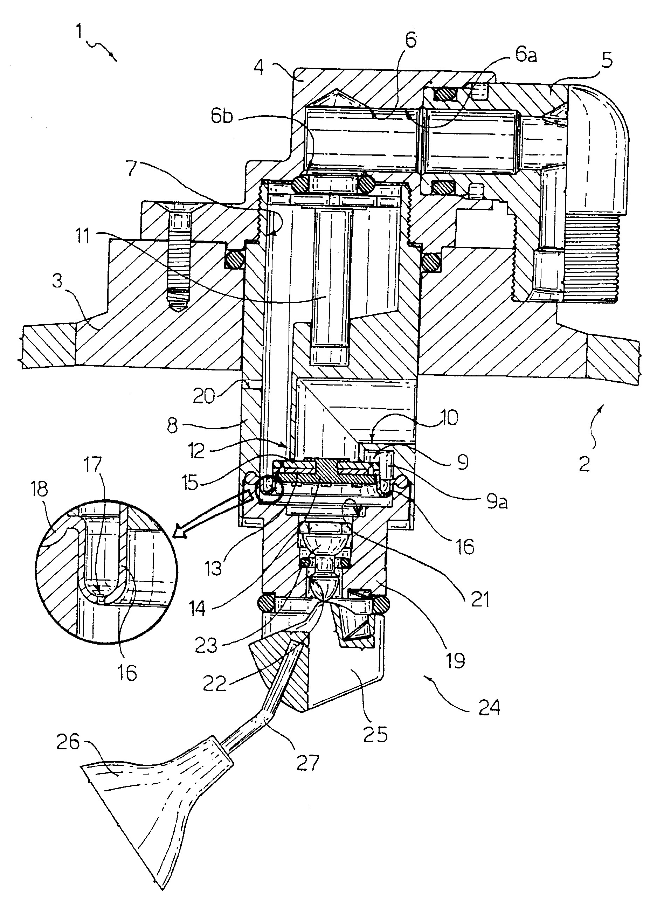

A non-limiting embodiment of the present invention will be described by way of example with reference to the accompanying drawing, which shows a partly sectioned view of a preferred embodiment of the fill valve according to the present invention, and fitted to a tank shown only partly.

Number 1 in the accompanying drawing indicates as a whole a maximum-fill valve for a vehicle gaseous fuel tank 2. Valve 1 is connected to an annular fastening body 3 connected integrally to tank 2, and comprises a connecting body 4 connected integrally in fluidtight manner to annular body 3 and supporting an elbow coupling 5 for connection to a gaseous fuel supply conduit not shown. Body 4 defines a conduit 6 comprising an inlet opening 6a communicating with coupling 5, and an outlet opening 6b communicating with a cavity 7 of a hollow body 8 located downstream from body 4, in the flow direction of the fuel into tank 2, and extending inside the tank through body 3.

Body 8 defines a variable-volume intermediate cavity 9 defined laterally by a wall 9a and communicating on one side with cavity 7, and on the other with a conduit 10 which comes out inside tank 2.

The inlet of cavity 7 is closed in fluidtight manner by a known piston 11 acting as a nonreturn valve; and intermediate cavity 9 houses a movable on-off member 12, which is movable inside cavity 9 between a rest position and a closed position, in which it closes the inlet of conduit 10 in fluidtight manner, engages intermediate cavity 9 with a certain amount of lateral clearance, and mates with an end portion of body 8 in fluidtight manner by means of an elastically deformable membrane 13. More specifically, member 12 comprises a rigid central body 14 having an inverted-T-shaped section, and to which an intermediate platelike portion of membrane 13 is connected integrally by means of a plate 15. Membrane 13 comprises a peripheral portion 16, and terminates with an annular portion 18 gripped between the end portion of body 8 and an end portion of a further tubular body 19 extending inside tank 2 and forming an extension of body 8. More specifically, viewed in half-cross-section, peripheral portion 16 is U-shaped, and has one or more holes 17 - in the example shown, a ring of diametrically opposite holes 17; and a passage 20 is formed in body 8 to enable cavity 7 to communicate directly with tank 2.

More specifically, together with on-off member 12, body 19 defines a chamber 21, which communicates with tank 2 via a conduit 22 housing a shutter 23 of a known float-operated closing device 24, which comprises a cam 25, on which shutter 23 rests, and a float 26 from which extends a rod 27 engaging cam 25.

In actual use, at the filling stage, on-off member 12 is maintained in the lowered open position, and float 26 rises gradually with the level of the fuel so as to rotate cam 25 by means of rod 27.

By the time the fuel in the tank reaches the predetermined maximum level, cam 25 is rotated into such a position as to exert no thrust on shutter 23, which moves down towards cam 25 to close conduit 22 in fluidtight manner and isolate chamber 21 from tank 2. Following the movement of shutter 23, on-off member 12 moves gradually into a closed position closing conduit 10 and so cutting off fuel flow into tank 2. In the closed position, peripheral portion 16 of membrane 13 is deformed with respect to the configuration assumed when on-off member 12 is in the lowered position.

At this point, the fuel gun is removed, and, since chamber 21 only communicates with cavities 9 and 7 via holes 17, and cavity 7 with tank 2 via passage 20, the pressure inside cavity 7 is practically equal to that inside tank 2 and chamber 21.

As a result of the above balance in the pressures of the various parts of the device, the action exerted by the previously deformed portion 16 of membrane 13 causes on-off member 12 to be restored to the open position.

Unlike known solutions, the membrane of the maximum-fill valve according to the invention therefore provides for eliminating any action caused by friction between the closing member and the lateral wall of the relative housing, thus reducing wear - which is frequently also aggravated by contaminants in the fuel - and improving response, so that fuel flow is cut off immediately upon the predetermined maximum level in the tank being reached. In the valve described, in fact, the closing member does not cooperate in sliding manner with the lateral wall of the housing. Moreover, unlike the known state of the art, the maximum-fill valve according to the invention includes no elastic means, and, not depending on the characteristics of elastic means for its operation, therefore provides for faster response and increased flow rate.

Clearly, changes may be made to valve 1 as described herein without, however, departing from the scope of the accompanying Claims.

For example, cavity 7 and conduit 10 of body 8 may be located otherwise than as described; and shutter 23 may comprise a different closing mechanism, i.e. portions 13, 14 and 15 may be formed otherwise than as shown by way of example. That is, plate 15 may be dispensed with, and the intermediate portion of membrane 13 may be thicker than as shown.

## Claims

1. A fill valve (1) for a vehicle gaseous fuel tank; the valve (1) comprising an intermediate cavity (9) defined laterally by a lateral wall (9a) and communicating with a fuel inlet channel (7) and with a fuel feed channel (10) for feeding fuel into a tank (2); and on-off means (12) movable inside said cavity (9) and for closing one of said channels (7, 10); characterized in that said on-off means (12) comprise a closing member (14) housed laterally loosely inside said cavity (9); and a membrane (13) interposed between said closing member (14) and said wall (9a), so that said closing member (14) mates in fluidtight manner with said wall (9a).

2. A valve as claimed in Claim 1, characterized in that said on-off means (12) comprise elastic means (16) acting on said closing member (14) to move said closing member into a rest position.

3. A valve as claimed in Claim 2, characterized in that said elastic means comprise a portion (16) of said membrane (13).

4. A valve as claimed in any one of the foregoing Claims, characterized in that said membrane (13) comprises at least one through hole (17).

5. A valve as claimed in any one of the foregoing Claims, characterized in that said membrane (13) comprises a peripheral portion (16) connected integrally to said wall (9a).

6. A valve as claimed in Claim 5, characterized in that said lateral wall (9a) comprises two separate portions; and in that said peripheral portion (16) is gripped between said two portions of said wall (9a).

7. A valve as claimed in any one of the foregoing Claims, characterized in that said membrane (13) comprises a connecting portion connected integrally to said closing member (14).

8. A valve as claimed in any one of the foregoing Claims, characterized by comprising a conduit (20) for connecting said fuel inlet channel (7) to the tank (2).

9. A valve as claimed in any one of the foregoing Claims, characterized in that said closing member comprises a rigid body (14) having an inverted-T-shaped section.
